# EUROPEAN PATENT SPECIFICATION

(11) **EP 1 511 819 B1**
(45) Date of publication and mention of the grant of the patent: **22.03.2006**
(21) Application number: 03735594.8
(22) Date of filing: 10.06.2003
(51) Int. Cl.: C09J 7/00, D06N 3/00, D04B 21/00

(54) **ADHESIVE TAPE**
KLEBEBAND
RUBAN ADHESIF

(30) Priority: 12.06.2002 GB 0213431
(43) Date of publication of application: 09.03.2005
(73) Proprietor: MILLIKEN EUROPE N.V., B-9000 Gent (BE); Milliken Fabrics SA, 80240 Roisel (FR)
(72) Inventor: TERNON, Gerard, F-76210 Bolbec (FR); KURJA, Jenci, B-8300 Knokke-Heist (BE); HESS, Werner, B-9831 Deurle (BE)
(74) Representative: Klusmann, Peter
(86) International application number: PCT/EP2003/006059
(87) International publication number: WO 2003/106580

(56) References cited:
- WO-A-94/17229
- US-A- 4 654 254
- US-A- 6 048 806

## Description

This invention relates to an adhesive tape comprising a knitted layer to which adhesive has been applied, in particular it relates to such tapes in which the fabric layer has weft yarns running substantially parallel to one another across the tape to guide the tearing of the tape.

Adhesive tapes comprising a fabric substrate and adhesive on one surface of the tape are well known. Originally most such tapes employed woven fabrics as the fabric substrate. This substrate was fixed to a film of impermeable material such as polyethylene film and pressure sensitive adhesive was then applied to and through the substrate to bond the substrate to the film and to provide the adhesive for the tape. One function of the film was to prevent adhesive from contacting the next layer of tape when it was wound onto a roll.

The tearability of woven tapes was found to be unsatisfactory so an improved adhesive tape was described in US 4 304 813. The improvement was to use a warp knit, weft inserted, continuous filament fabric substrate in place of the woven fabric substrate. To manufacture the adhesive tape the fabric substrate is pre-formed and then mated with a polyethylene film by nipping between two calender rolls. The first calendar roll is supplied, by a kiss roll, a rubber gum pressure sensitive adhesive which is pressed into and through the fabric substrate to laminate the fabric substrate to the film to provide the pressure sensitive tape when allowed to set after passing through the nip of the calender rolls. Such tapes are expensive to manufacture because of the amount of glue that is not available for use in the final tape due to it being effectively "sunk" into recesses in the substrate or used to join the substrate to the film.

To reduce the substrate cost open substrate constructions such as those described in WO01/83632 are known. Here a polymer film is extruded onto an open reinforcement or substrate layer of weft insertion warp knit fabric. Unless the adhesive is coated onto the film instead of the substrate these open constructions still suffer from the problem of the sunken adhesive due to the openness of the substrate before it is coated with polymer. WO01/83632 says that the open construction substrate fabric may optionally be manufactured such that it includes tape yarns in the weft and / or warp. Reinforcement layers with yarns in tape form, including co-extended tape and filament yarn to which functional sizing has been applied are disclosed.

An alternative approach which also uses tape yarns is taken in EP 0 848 048. Here the fabric substrate is a woven layer whose warp and weft are thermoplastic resin flat yarns. The substrate has a film of polyethylene laminated to one or both surfaces before adhesive is applied to the film. This solves the problem of wastage of adhesive due to it sinking into the fabric substrate because no adhesive is applied to the woven fabric substrate.

The need to laminate or extrude a thermoplastic film to the fabric substrate between the time that the substrate is manufactured and the final application of adhesive is a disadvantage because it is an extra process step and the product complexity in also increased due to the presence of one, or even two, films to the fabric substrate.

US 4654254 describes a medical athletic tape comprised of cotton warp yarns and textured polyester weft yarns having a layer of adhesive disposed thereon. The denier of the textured polyester weft yarn may be between 40 to 200. The textured yarn is said to fill spaces in the fabric and to prevent the adhesive from penetrating through the fabric. The weft yarn count is 20 to 50 and preferably 40 per inch (per cm approx. 8 to 20 and 15.7 preferred)

A further approach has been to use a closed non-woven material for the substrate. These are known for example from US 5631073, DE 29819014, DE19523494, WO01/16245, EP1116764 and EP0668336. DE19523494 describes the thermal calendering of spun bonded polypropylene before adhesive is applied. The calendering gives a flatness of 10 to 30%. Non-woven substrates suffer from the disadvantage of poor directional tearability due to the absence of any weft yarns to guide a tear across the tape.

According to the present invention there is provided an adhesive tape comprising a weft insertions warp knit substrate in which the weft yarn is a higher decitex than the knit yarn and a layer of adhesive coated onto the substrate, characterized in that the substrate is closed to substantially prevent the passage of adhesive through it, wherein when the tape is unwound substantially no adhesive transfers from the adjacent layer of tape to the exposed, non-adhesive, side of the adjacent substrate.

For the reasons explained hereafter the weft count is preferably less than 15 per cm and more preferably lies in the range 1 to 10 per cm, most preferably in the range 1 to 5 per cm.

The weft is preferably substantially flat. By substantially flat we mean that the ratio of the thickness to width of the yarn in the adhesive tape is at least 4 and preferably it is at least 8 and more preferably it is at least 20 and using available tape yarns it may be as high as about 100. That is to say the width of the tape yarn is 100 times its thickness.

A WIWK construction means that all of the weft yarns are on one face of the fabric. This contrasts with woven constructions where the weft yarns are located on both faces of the fabric and are split apart by the warp yarns. Particularly for embodiments where heat calendering is used to close the fabric the advantage of having all the weft yarns lying in the same plane on the same face of the fabric is considerable. In some cases it is even possible to reach a final tape construction where the thin weft yarns meld together to form a layer which is similar to the prior art separate or extruded on polymer layer. However, the advantageous difference is that the knit stitching goes around this "layer" to help to hold it in place.

By closed it is intended to mean that during manufacture adhesive does not pass through the substrate to render the other side sticky. If it did this would be a problem for unwinding the tape from a roll. Furthermore it is important that when the tape is unwound substantially no adhesive from the adjacent layer of tape detaches itself and adheres instead to the side of the substrate to which it had not originally been applied. Closure of the substrate also significantly reduces the quantity of adhesive that must be applied as it reduces the proportion of the adhesive that "sinks" into the substrate.

Suitable adhesives for use with the substrate according to the invention may be chosen from the group consisting of rubber based adhesives (both natural and synthetic), acrylic based adhesives, silicone based adhesives and polyurethane based adhesives and combinations thereof. Preferably the adhesive is selected from group consisting of: Natural Rubber, Polyisoprene, Styrene-Isoprene Block Copolymer, Styrene-Butadiene Block Copolymer, Butyl Rubber, Polystyrene-Poly (ethylene/butylene) - Polystyrene, Polystyrene - Poly(ethylene/propylene) - Polystyrene, Polystyrene - Polyisoprene - Polybutadiene, Polybutene, Polyacrylates, Polydiacrylates, Polytriacrylates, Poly methacrylates, Polydimethacrylates, Polytrimethacrylates, Polytetramethacrylates, Polyacrylamides, Polymethacrylamides, Polyacrylimides, Polymethacrylimides, Polymethacrylic acid, Polyacrolein, Polymethacrylonitrile, Poly(maleic acid) and derivatives, Poly(fumaric acid) and derivatives, Poly(crotonic acid) and derivatives, Poly(itaconic acid) and derivatives, Poly(ciraconic acid) and derivatives, Poly(maleamic acid) and derivatives, Poly(vinyl ethers), Polyisocyanates, Polystyrene and derivatives, Polylactones, Polybetaines and compatible mixtures thereof.

The closed substrate may be formed in a number of ways. In one embodiment it may be formed by knitting through an impermeable laminar material into the substrate. Possibly this laminar material is fractured into tapes by being knit into the substrate.

Alternatively and more preferably the closed substrate is created by knitting pre-formed tape-yarns into the substrate during its manufacture and then fusing the tape-yarns and optionally the other yarns in the substrate to create the closed substrate. The fusion may be achieved by passing the substrate through rollers, at least one of which is heated. This provides the advantage of flattening the substrate at the same time as it is closed. The use of one heated roller would suffice as the important thing is to produce a relatively flat closed surface on one side of the substrate. For some types of adhesive this may be the side to which adhesive is applied, for others the adhesive may require to be applied to the less flattened side. The side is chosen that best reduces the tendency for adhesive to transfer or bond to the other surface during storage of the adhesive tape on a roll.

The substrate may alternatively be closed by heating it using hot gas or steam, this technique is particularly effective when shrinkable weft and/or warp yarns are utilised. After such shrinkage the substrate may be flattened by passing it through rollers at least one of which may be heated.

The substrate may, alternatively, include texturised yarns and/or spun yarns. The texturised yarns can be melded and optionally fused to create the closed substrate. For such yarns the melding or fusion is preferably achieved by exposing the substrate to hot gas or steam. The substrate may then be flattened by passing the substrate through rollers, at least one of which is heated. Other types of yarn suitable for use in the substrate either alone or in combination with the above yarns may be selected from bulked yarn, core yarn, bi-component yarns, spun yarns, coated yarn and combinations thereof. Preferably the weft yarns are 1000 dtex or less. Weft yarns with 150 dtex or even as low as 20 dtex may be used.

In some preferred embodiments suitable yarns may be made from any man-made organic materials, any polymers or any blends of polymers, including as examples only and without limitation: silicone grafted polyethylene, poly tetrafluoroethylene (Teflon), fluorinated polyolefins, chlorinated polyolefins, polyethylene (including low density, high density, linear low density, medium density, metallocene catalyzed), polypropylene, EPDM rubber, polyvinyl stearyl carbamate, poly chloro trifluoroethylene (Aclar), polystyrene, polyvinyl chloride, polyamide (including polyamide 4, polyamide 6, polyamide 6,6, polyamide 6,10, polyamide 6,12, polyamide 4,6, polyamide 11, polyamide 12 ), polyurethane (aliphatic: polyether or polyester, aromatic: polyether or polyester), polyvinylidene chloride, polyethylene terephthalate and copolymers of the same, polybutylene terephthalate and copolymers of the same, poly trimethylene terephthalate and copolymers of the same, copolymers of polyethylene (including ionomers, ethylene acrylic acid, ethylene methyl acrylate, ethylene vinyl acetate, ethylene n-butyl acrylate), polyacrylonitrile, polymethylmethacrylate, polycarbonate, polysulfone, and cellophane and combinations thereof.

In addition, or alternatively, the closed substrate may include natural fibers or mixtures of natural and man made fibres such as cotton or rayon. Yarns made from such fibers are conventionally used in the hygiene and medical tape fields. By utilizing such fibers the present invention is capable of providing alternatives to those types of adhesive tapes.

Particularly important polymers for technical tape applications are polyarylate, polyvinyl alcohol, polyvinyl chloride, polychlal (mix of PVA/PVC), fluorocarbon, phenolic, polyacrylate, poly- benzimidazole, polyetheretherketone, polyetherimide, polyethersulfone, polyphenylenebenzo-bisoxazole and polyphenylene sulphide.

In addition to being in the weft direction of the closed substrate, the closable yarns can also be in warp and/or in one or more bias directions in the fabric. The weft yarns could also be at a bias angle to the machine direction of the fabric and the tape. By making the yarns at an angle in this way their apparent width in the machine direction is increased and this assists in the closing of the substrate. Spun yarns can, however, only be used in weft. It is possible to alternate the type of yarn used in weft. For example a film-tape weft could be alternated with a spun weft. By selection of weft yarns which shrink in length during closure of the fabric substrate it is possible to get a further closing effect due to the warp yarns being made to be closer together, thereby effectively increasing the number of warp ends. This is only possible if the fabric is not held in stretching equipment such as a tenter during the closing process. Similarly by use of a shrinkable warp yarn the wefts can be closed up during heat processing.

The invention will now be further described by way of example only and with reference to the drawings, which are briefly described as:
Figure 1a is the face side of a WIWK fabric with tape yarn weft insertions and chain stitching yarn;
Figure 1b is the back side of figure 1a;
Figure 2a is the face side of tricot stitch WIWK fabric with tape yarn inlay warp and a weft inserted in each stitch;
Figure 2b is the back side of figure 2a;
Figure 3a is the face side of a closed chain stitch working on two needles WIWK fabric with tape yarn inlay warp and a weft inserted in each stitch;
Figure 3b is the back side of figure 3a;
Figure 4a is the face side of an open tricot stitch working on two needles WIWK fabric with tape yarn inlay warp and a weft inserted in each stitch;
Figure 4b is the back side of figure 4a;
Figure 5a is the face side of a chain stitch WIWK fabric with a film inserted and stitched through;
Figure 5b is the back side of figure 5a;
Figure 6a is the face side of a tricot stitch WIWK fabric with a film inserted and stitched through; and with a weft inserted in each stitch; and
Figure 6b is the back side of figure 6a.

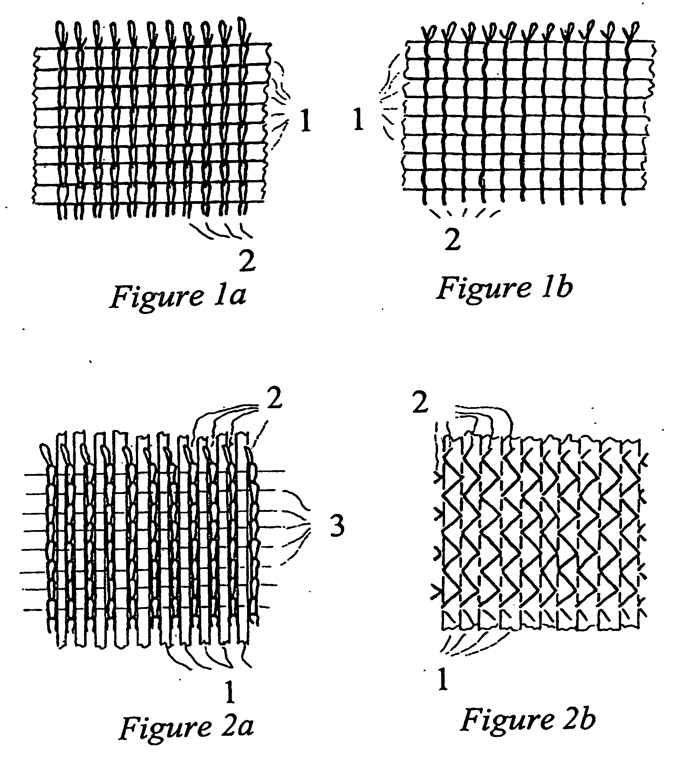

Figure la shows the stitched side, or face side, or technical side of a WIWK fabric. Figure 1b is the back side, or between the stitches, side of the same WIWK fabric. Film-tape weft yarns 1 are inserted into the fabric using a weft insertion warp knit process. To avoid twist being imparted to the film-tapes as they unwind from the bobbins it is desirable to use a creel which has a rotating weft bobbin that rotates one turn for each turn of yarn taken from the bobbin. Such a creel is, for example, manufactured by Karl Mayer of Germany.

By hot calendering either, or both, surfaces the film-tape 1 can be sufficiently modified to form a substantially impermeable surface onto which adhesive can be applied directly by means of a roller or blade or some other conventional adhesive applicator.

Additionally the film-tape 1 can be used in the warp direction (figs 2a, 2b, 3a, 3b, 4a and 4b).

Figs 2a and 2b show a WIWK fabric made with a tricot stitch 2 with closed stitches 1,0 / 1,2 or opened stitches 0,1/2,1. In this embodiment the film-tape is used as an inlay warp (0,0 / 0,0). It is also necessary to use a weft yarn 3, which can be almost any type of yarn normally used to guide the tearability of the fabric.

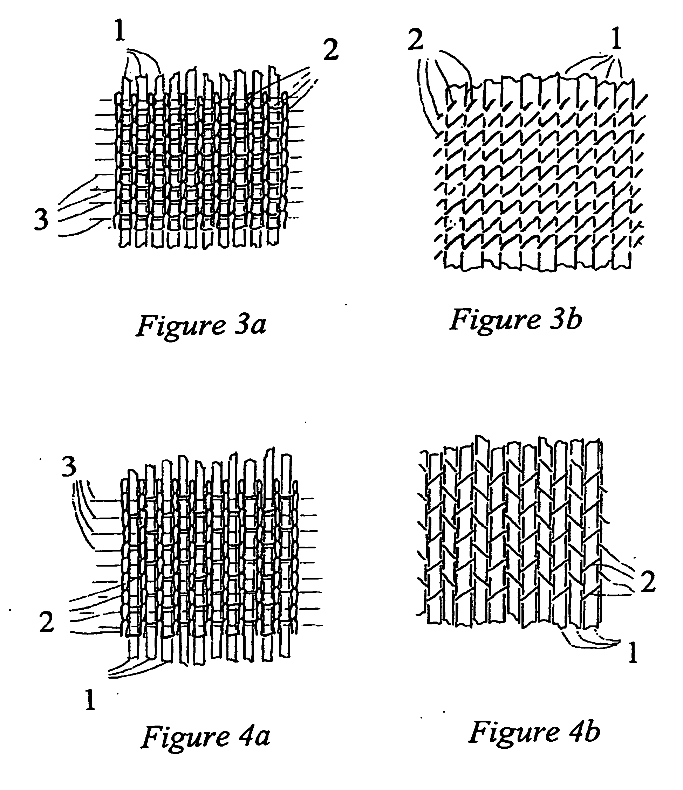

Figs 3a and 3b show a similar fabric to that of figs 2a and 2b except that a chain stitch 2 working on two needles with closed stitched (0,2 / 0,2) is used.

Figs 4a and 4b show another fabric similar to figs 3a and 3b working on a tricot stitch with two needles with open stitches (0,2 / 3,1).

In the embodiments of figs 2, 3 and 4 the film-tapes may be fused together by hot calendering before adhesive is applied. For these embodiments where the film-tape is used in the warp direction it is more difficult to get the required impermeability from just the film-tape alone. Accordingly it is desirable that the other yarns be of similar thermoplastic material to enable then to fuse to the film-tapes and to provide a higher degree of impermeability.

The embodiment of figures 1a and 1b are preferred because they allow engineering of the desired property of tearability in the weft direction. They may also eliminate the need for a separate weft yarn. In one particularly preferred variant of figs 3 and 4 the weft yarn is also a tape yarn to give a lattice of tape yarns.

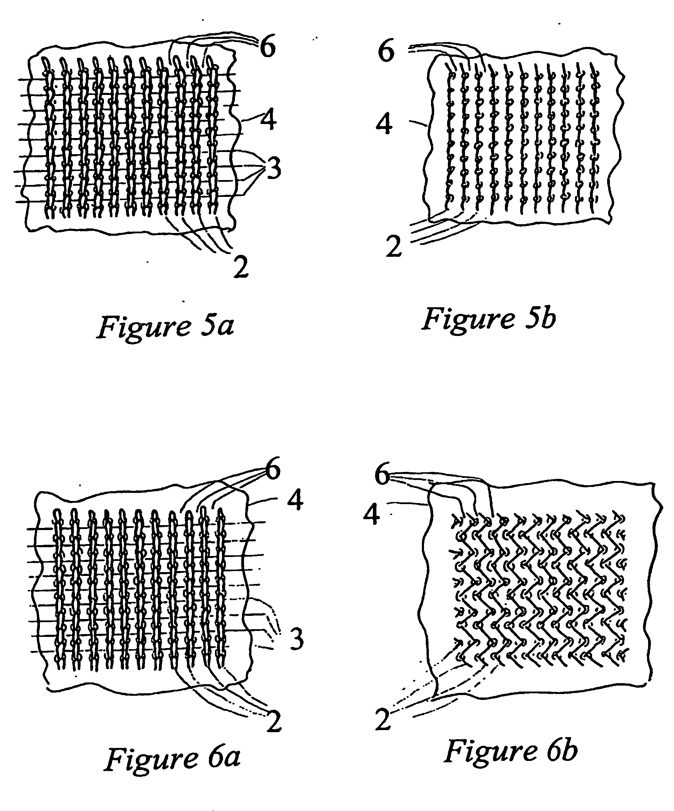

As an alternative to the insertion of tape yarns the tapes can, in effect, be created *in situ* by the insertion of a plain film 4 during the knitting as shown in figures 5a, 5b, 6a and 6b. The stitch through needles will cut the film in parallel tapes corresponding to the width between two needles 6. The plain film is shown inserted above the weft inserted and therefore the weft can be seen only on the face side. Alternatively it is possible to produce a fabric with the plain film inserted beneath the weft insert.

The film tapes, plain film precursors of film tapes, texturised yarns, or spun yarns may be formed of any low melting point thermoplastic materials such as polyolefins: for example polyethylene or polypropylene. When using film or a warp inlay tape, a weft yarn may be used to define the tearing direction of the technical tape. Use of a sufficiently high denier yarn will ensure that a tear runs across the tape in a straight line, as the tear will not cross the inlaid weft yarn. The film tapes or plain film precursors of film tapes can be formed of elastic or deformable material to give stretch or elastic properties to the tape. A maximum elasticity of 35% is desirable. Especially preferred are elastomeric or non-fixed preoriented yarn materials.

Using the thermoplastic weft yarns in bias direction defines a bias tearing direction for the technical tape.

The preferred WIWK construction using a film tape yarn in weft is a chain stitch 2 with closed or open stitches and a film tape weft inserted in each stitch as shown in figures 1a and 1b.

The preferred WIWK construction for a stitched though plain film is a stitching yarn using a tricot stitch 1.0 / 1,2 with closed stitches or with opened stitches 0,1 /2,1 and a weft inserted yarn 3 in each stitch.

The preferred yarn used in the warp for the stitch yarn should be polyester or polyamide from 20 denier (22 decitex) to 150 denier (167 decitex) with flat or textured continuous filament yarns.

The number of warp ends will depend on the number of needles per cm or the gauge. 7.1 warp ends per cm is 18 needles per inch or 18 gauge. The preferred number of ends per cm is from 2 to 16.

The use of a polyolefin stitching yarn (multifilament flat or textured) gives the possibility to produce a 100% polyolefin WIWK fabric tape substrate. Then with the use of a suitably compatible adhesive the entire tape may be recycled. Even without a suitable adhesive any waste substrate up to the point of application of the adhesive may advantageously be recycled.

The preferred construction has a weft film-tape inserted in each stitch. The film tape is advantageously a polypropylene film-tape yarn and the width of the film-tape corresponds to the length of the stitch. As the length of the stitch is the inverse of the number of stitches per cm (or per inch), and as the preferred constructions in weft are between 1 and 10 wefts per cm. For 1 weft per cm the preferred width of the film tape should therefore be 1cm and for 10 wefts per cm the preferred width of film tape should be 1mm. The most preferred weft count lies in the range 1 to 5 per cm. The width of the weft may be smaller than the length of the stitch. In that case, it is particularly preferred that shrinkable warp yarns are used which, after shrinkage, e.g. after heating using hot gas or steam, provide a length of the stitch that essentially corresponds to the width of the weft.

The thickness of the film tape will depend on the desired thickness of the eventual adhesive tape product. The preferred thickness will be in the range 0.1 to 0.5 mm. But a thickness of from 0.025mm up to 1mm is possible technically.

It is possible to use a plain film with a weft insertion of another film-tape of a different material to obtain a substrate having two sides with different properties, for example one material with high substantivity to the adhesive and one with low substantivity to the adhesive. One variant desirably combines polypropylene and polyethylene in this way.

### Example

A sample tape was made using a weft insertion yarn of 900 dtex BCF polypropylene. It was calendered at by passing through a hot roller (160deg C) and when viewed optically it was seen to be almost fully closed. Use of higher decitex yarn did not close the substrate so effectively. This is thought to be because it is harder to melt the higher decitex yarn by passing it through a single roller. Use of multiple rollers would solve this problem. For the 900 dtex sample the yarn remained profiled on one side and was flat on the other side due to the action of the roller.

The flat side was then coated with an adhesive in the manner conventional for tape manufacture. The resulting adhesive tape for tested for adhesion to the non-calendered side of the tape. It peeled well leaving no detectable traces of adhesive.

## Claims

1. An adhesive tape comprising a weft insertion warp knit (WIWK) substrate in which the weft insertion warp knit substrate comprises a weft yarn that is a higher decitex than the knit yarn and a layer of adhesive coated onto the substrate, **characterised in that** the substrate is closed to substantially prevent the passage of adhesive through it, wherein when the tape is unwound substantially no adhesive transfers from the adjacent layer of tape to the exposed, non-adhesive, side of the adjacent substrate.

2. An adhesive tape according to claim 1 wherein the weft count lies in the range 1 to 10 per cm.

3. An adhesive tape according to claim 2 wherein the weft count lies in the range 1 to 5 per cm.

4. An adhesive tape according to any preceding claim wherein the yarns are selected from the group consisting of man-made organic materials, any polymers or any blends of polymers.

5. An adhesive tape according to claim 4 wherein the yarns are selected from the group consisting of: silicone grafted polyethylene, poly tetrafluoroethylene (Teflon), fluorinated polyolefins, chlorinated polyolefins, polyethylene (including low density, high density, linear low density, medium density, metallocene catalyzed), polypropylene, EPDM rubber, polyvinyl stearyl carbamate, poly chloro trifluoroethylene (Aclar), polystyrene, polyvinyl chloride, polyamide (including polyamide 4, polyamide 6, polyamide 6,6, polyamide 6,10, polyamide 6,12, polyamide 4,6, polyamide 11, polyamide 12 ), polyurethane (aliphatic: polyether or polyester, aromatic: polyether or polyester), polyvinylidene chloride, polyethylene terephthalate and copolymers of the same, polybutylene terephthalate and copolymers of the same, poly trimethylene terephthalate and copolymers of the same, copolymers of polyethylene (including ionomers, ethylene acrylic acid, ethylene methyl acrylate, ethylene vinyl acetate, ethylene n-butyl acrylate), polyacrylonitrile, polymethylmethacrylate, polycarbonate, polysulfone, and cellophane and combinations thereof.

6. An adhesive tape according to claim 4 wherein the yarns are selected from the group consisting of polyarylate, polyvinyl alcohol, polyvinyl chloride, polychlal (mix of PVA/PVC), fluorocarbon, phenolic, polyacrylate, polybenzimidazole, polyetheretherketone, polyetherimide, polyethersulfone, polyphenylenebenzobisoxazole and polyphenylene sulphide.

7. An adhesive tape according to any preceding claim in which at least a portion of the weft yarns is spun yarns.

8. An adhesive tape according to claim 7 in which the weft yarns are 1000dtex or less.

9. An adhesive tape according to any preceding claim wherein in addition to being in the weft direction of the fabric, the closable yarns can also be in warp and/or in one or more bias directions in the fabric.

10. An adhesive tape according to any preceding claim in which the adhesive is selected from the group consisting of rubber based adhesives (both natural and synthetic), acrylic based adhesives, silicone based adhesives and polyurethane based adhesives and combinations thereof.

11. An adhesive tape according to claim 10 in which the adhesive is selected from group consisting of: Natural Rubber, Polyisoprene, Styrene-Isoprene Block Copolymer, Styrene-Butadiene Block Copolymer, Butyl Rubber, Polystyrene-Poly(ethylene/butylene) - Polystyrene, Polystyrene - Poly (ethylene/propylene) - Polystyrene, Polystyrene - Polyisoprene - Polybutadiene, Polybutene, Polyacrylates, Polydiacrylates, Polytriacrylates, Poly methacrylates, Polydimethacrylates, Polytrimethacrylates, Polytetramethacrylates, Polyacrylamides, Polymethacrylamides, Polyacrylimides, Polymethacrylimides, Polymethacrylic acid, Polyacrolein, Polymethacrylonitrile, Poly(maleic acid) and derivatives, Poly(fumaric acid) and derivatives, Poly(crotonic acid) and derivatives, Poly(itaconic acid) and derivatives, Poly(ciraconic acid) and derivatives, Poly(maleamic acid) and derivatives, Poly(vinyl ethers), Polyisocyanates, Polystyrene and derivatives, Polylactones, Polybetaines and compatible mixtures thereof.

12. A process for forming an adhesive tape according to any preceding claim wherein the substrate is formed by knitting an impermeable laminar material into the substrate.

13. A process according to claim 12 in which this laminar material is fractured into tapes by being knit into the substrate.

14. A process for forming an adhesive tape according to any preceding claim wherein substrate is created by knitting pre-formed tape yarns into the substrate during its manufacture and then fusing the tape-film and optionally other yarns in the substrate to create the closed substrate.

15. A process according to claim 14 in which the fusion is achieved by heating the substrate before application of the adhesive.

16. A process according to claim 15 in which the heating is provided by hot gas or steam passing over the substrate.

17. A process according to claim 15 or 16 in which at least one face of the substrate is flattened further by passing the substrate through rollers, at least one of which is heated.

18. A weft insertion warp knit (WIWK) substrate in which the weft insertion warp knit substrate comprises a weft yarn that is a higher decitex than the knit yarn for use in the manufacture of an adhesive tape according to any one of claims 1 to 13, **characterised in that** the substrate includes texturised yarns.

19. A substrate according to claim 18 wherein the texturised yarns, are melded and optionally fused to create the closed substrate.

20. A substrate according to claim 19 wherein the melding or fusion is achieved by passing hot gas or steam over the substrate.

21. A substrate according to claim 19 or claim 20 wherein the substrate is passed through rollers, at least one of which is heated, to flatten at least one face of the substrate and optionally to assist in providing melding or fusion of the substrate.

22. A weft insertion warp knit (WIWK) substrate in which the weft insertion warp knit substrate comprises a weft yarn that is a higher decitex than the knit yarn for use in the manufacture of an adhesive tape according to any one of claims 1 to 13, **characterised in that** the substrate includes tape-film, knitted into the substrate.

23. A substrate according to claim 22 in which the tape-film is formed from a sheet, which is fractured into tapes by being knit into the substrate.

24. A substrate according to claim 23 in which the tape-film is created by knitting pre-formed tape yarns into the substrate.

25. A substrate according to claim 23 or claim 24 in which the substrate is closed by thermal fusion of the tape-film and optionally the other substrate yarns.

26. A substrate according to claim 25 in which the tape-film includes texturised yarns.

27. A substrate according to claim 25 or claim 26 in which the tape-film is thermoplastic.

28. A substrate according to claim 25 in which the fusion is achieved by passing the substrate with the thermoplastic tape-films or texturised yarns through at least one heated roller.

## Revendications

1. Bande adhésive comprenant un substrat de maille trame insertion chaîne (WIWK) dans laquelle le substrat de maille trame insertion chaîne comprend un fil de trame qui est d'un decitex plus élevé que le fil de maille et une couche d'adhésif déposée sur le substrat, **caractérisée en ce que** le substrat est fermé pour éviter pratiquement le passage d'adhésif à travers celui-ci, dans laquelle lorsque la bande est déroulée pratiquement aucun adhésif n'est transféré de la couche adjacente de la bande vers le côté non adhésif exposé du substrat adjacent.

2. Bande adhésive selon la revendication 1, dans laquelle le nombre de trame se trouve dans l'intervalle de 1 à 10 par cm.

3. Bande adhésive selon la revendication 2, dans laquelle le nombre de trame se trouve dans l'intervalle de 1 à 5 par cm.

4. Bande adhésive selon l'une quelconque des revendications précédentes, dans laquelle les fils sont choisis parmi des matières organiques synthétiques, des polymères ou des combinaisons de polymères.

5. Bande adhésive selon la revendication 4, dans laquelle les fils sont choisis parmi : du polyéthylène silicone-greffé, du polytétrafluoro-éthylène (Téflon), des polyoléfines fluorées, des polyoléfines chlorées, du polyéthylène (comprenant faible densité, densité élevée, faible densité linéaire, densité moyenne, métallocène catalysé), du polypropylène, du caoutchouc EPDM, du poly(vinylstéaryle carbamate), du polychlorotrifluoro-éthylène (Aclar), du polystyrène, du poly(chlorure de vinyle), du polyamide (comprenant polyamide 4, polyamide 6, polyamide 6,6, polyamide 6,10, polyamide 6,12, polyamide 4,6, polyamide 11, polyamide 12), du polyuréthane (aliphatique : polyéther ou polyester, aromatique : polyéther ou polyester), du poly(chlorure de vinylidène), du poly(éthylène téréphtalate) et des copolymères de ceux-ci, du poly(butylène téréphtalate) et des copolymères de ceux-ci, du poly(triméthylène téréphtalate) et des copolymères de ceux-ci, des copolymères de polyéthylène (comprenant des ionomères, l'acide éthylèneacrylique, le méthylacrylate d'éthylène, le vinylacétate d'éthylène, le n-butylacrylate d'éthylène), du polyacrylonitrile, du poly(méthacrylate de méthyle), du polycarbonate, de la polysulfone et du Cellophane et des combinaisons de ceux-ci.

6. Bande adhésive selon la revendication 4, dans laquelle les fils sont choisis parmi du polyarylate, du poly(alcool vinylique), du poly(chlorure de vinyle), du polychlal (mélange de PVA/PVC), du fluorocarbone, une matière phénolique, du polyacrylate, du polybenzimidazole, de la polyétheréthercétone, du polyétherimide, de la polyéthersulfone, du polyphénylènebenzobisoxazole et du poly(sulfure de phénylène).

7. Bande adhésive selon l'une quelconque des revendications précédentes dans laquelle au moins une partie des fils de trame est constituée de filés.

8. Bande adhésive selon la revendication 7, dans laquelle les fils de trame sont 1000 dtex ou inférieur.

9. Bande adhésive selon l'une quelconque des revendications précédentes, dans laquelle en plus d'être dans la direction de trame du tissu, les fils pouvant être fermés peuvent également être dans la chaîne et/ou dans une ou plusieurs directions obliques dans le tissu.

10. Bande adhésive selon l'une quelconque des revendications précédentes, dans laquelle l'adhésif est choisi parmi des adhésifs à base de caoutchouc (à la fois naturel et synthétique), des adhésifs de base acrylique, des adhésifs à base de silicone et des adhésifs à base de polyuréthane et des combinaisons de ceux-ci.

11. Bande adhésive selon la revendication 10, dans laquelle l'adhésif est choisi parmi : du caoutchouc naturel, du polyisoprène, un copolymère séquencé de styrène-isoprène, un copolymère séquencé de styrène-butadiène, un caoutchouc butylique, du polystyrène-poly-(éthylène/butylène)-polystyrène, du polystyrène-poly(éthylène/propylène)-polystyrène, du polystyrène-polyisoprène-polybutadiène, du polybutène, des polyacrylates, des polydiacrylates, des polytriacrylates, des polyméthacrylates, des polydiméthacrylates, des polytriméthacrylates, des polytétraméthacrylates, des polyacrylamides, des polyméthacrylamides, des polyacrylimides, des polyméthacrylimides, du poly(acide méthacrylique), de la polyacroléine, du polyméthacrylonitrile, du poly(acide maléique) et des dérivés, du poly(acide fumarique) et des dérivés, du poly(acide crotonique) et des dérivés, du poly(acide itaconique) et des dérivés, du poly(acide ciraconique) et des dérivés, du poly(acide maléamique) et des dérivés, des poly(vinyléthers), des polyisocyanates, du polystyrène et des dérivés, des polylactones, des polybétaïnes et des mélanges compatibles de ceux-ci.

12. Procédé pour la formation d'une bande adhésive selon l'une quelconque des revendications précédentes, dans lequel le substrat est formé en tricotant un matériau stratifié imperméable dans le substrat.

13. Procédé selon la revendication 12, dans lequel ce matériau stratifié est coupé en bandes en étant tricoté dans le substrat.

14. Procédé pour la formation d'une bande adhésive selon l'une quelconque des revendications précédentes, dans lequel un substrat est créé en tricotant des fils de bandes préformées dans le substrat pendant sa fabrication et en faisant ensuite fondre le film en bandes et facultativement d'autres fils dans le substrat pour créer le substrat fermé.

15. Procédé selon la revendication 14, dans lequel la fusion est réalisée en chauffant le substrat avant l'application de l'adhésif.

16. Procédé selon la revendication 15, dans lequel le chauffage est réalisé par le passage de gaz chaud ou de vapeur sur le substrat.

17. Procédé selon la revendication 15 ou 16, dans lequel au moins une face du substrat est aplanie en faisant encore passer le substrat à travers des rouleaux dont au moins un est chauffé.

18. Substrat de maille trame insertion chaîne (WIWK) dans lequel le substrat de maille trame insertion chaîne comprend un fil de trame qui est d'un decitex plus élevé que le fil de maille pour une utilisation dans la fabrication d'une bande adhésive selon l'une quelconque des revendications 1 à 13, **caractérisé en ce que** le substrat comprend des fils texturisés.

19. Substrat selon la revendication 18, dans lequel les fils texturisés sont melded et facultativement fondus pour créer le substrat fermé.

20. Substrat selon la revendication 19, dans lequel le melding ou la fusion est réalisé en faisant passer du gaz chaud ou de la vapeur sur le substrat.

21. Substrat selon la revendication 19 ou la revendication 20, dans lequel le substrat passe à travers des rouleaux dont au moins un est chauffé pour aplanir au moins une face du substrat et aider facultativement à fournir un melding ou une fusion du substrat.

22. Substrat de maille trame insertion chaîne (WIWK) dans lequel le substrat de maille trame insertion chaîne comprend un fil de trame qui est d'un decitex plus élevé que le fil de maille pour une utilisation dans la fabrication d'une bande adhésive selon l'une quelconque des revendications 1 à 13, **caractérisé en ce que** le substrat comprend un film en bandes tricoté dans le substrat.

23. Substrat selon la revendication 22, dans lequel le film en bandes est formé à partir d'une feuille qui est fracturée en bandes en étant tricotée dans le substrat.

24. Substrat selon la revendication 23, dans lequel le film en bandes est créé en tricotant des fils de bandes préformées dans le substrat.

25. Substrat selon la revendication 23 ou la revendication 24, dans lequel le substrat est fermé par fusion thermique du film en bandes et facultativement des autres fils du substrat.

26. Substrat selon la revendication 25, dans lequel le film en bandes comprend des fils texturisés.

27. Substrat selon la revendication 25 ou la revendication 26, dans lequel le film en bandes est thermoplastique.

28. Substrat selon la revendication 25, dans lequel la fusion est réalisée en faisant passer le substrat avec les films en bandes thermoplastiques ou les fils texturisés à travers au moins un rouleau chauffé.

## Patentansprüche

1. Klebeband, umfassend ein kettengewirktes (WIWK-) Substrat, wobei das kettengewirkte Substrat ein Schußgarn umfaßt, das einen höheren Titer als das Wirkgarn und eine auf dem Substrat beschichtete Klebeschicht aufweist, **dadurch gekennzeichnet, daß** das Substrat geschlossen ist, um den Durchgang des Klebstoffs hierdurch im wesentlichen zu verhindern, wobei kein Klebstoff von der angrenzenden Bandlage zu der nicht klebrigen Oberflächenseite des angrenzenden Substrats transferiert wird, wenn das Band entwickelt wird.

2. Klebeband nach Anspruch 1, wobei die Schußzahl in dem Bereich von 1 bis 10 pro cm liegt.

3. Klebeband nach Anspruch 2, wobei die Schußzahl in dem Bereich von 1 bis 5 pro cm liegt.

4. Klebeband nach einem der vorhergehenden Ansprüche, wobei die Garne ausgewählt werden aus der Gruppe bestehend aus synthetischen organischen Materialien, Polymeren oder Mischungen von Polymeren.

5. Klebeband nach Anspruch 4, wobei die Garne ausgewählt werden aus der Gruppe bestehend aus: Silicon-gepfropftes Polyethylen, Polytetrafluorethylen (Teflon), fluorierte Polyolefine, chlorierte Polyolefine, Polyethylen (einschließlich solches geringer Dichte, hoher Dichte, lineares hoher Dichte, mittlerer Dichte, Metallocenkatalysierte), Polypropylen, EPDM-Kautschuk, Polyvinylstearylcarbamat, Polychlortrifluorethylen (Aclar), Polystyrol, Polyvinylchlorid, Polyamid (einschließlich Polyamid 4, Polyamid 6, Polyamid 6,6, Polyamid 6,10, Polyamid 6,12, Polyamid 4,6, Polyamid 11, Polyamid 12), Polyurethan (aliphatisch: Polyether oder Polyester, aromatisch: Polyether oder Polyester), Polyvinylidenchlorid, Polyethylenterephthalat und Copolymeren davon, Polybutylenterephthalat und Copolymeren davon, Polytrimethylenterephthalat und Copolymeren davon, Copolymeren von Polyethylen (einschließlich Ionomeren, Ethylenacrylsäure, Ethylenmethylacrylat, Ethylenvinylacetat, Ethylen-n-butylacrylat), Polyacrylonitril, Polymethylmethacrylat, Polycarbonat, Polysulfon und Cellophan und Kombinationen hiervon.

6. Klebeband nach Anspruch 4, wobei die Garne ausgewählt werden aus der Gruppe bestehend aus Polyarylat, Polyvinylalkohol, Polyvinylchlorid, Polychlal (Mischung aus PVA/PVC), Fluorkohlenstoff, phenolischen, Polyacrylat, Polybenzimidazol, Polyetheretherketon, Polyetherimid, Polyethersulfon, Polyphenylenbenzobisoxazol und Polyphenylensulfid.

7. Klebeband nach einem der vorhergehenden Ansprüche, bei dem zumindest ein Teil der Schußgarne gesponnene Garne sind.

8. Klebeband nach Anspruch 7, bei dem die Schußgarne 1.000 dtex oder weniger aufweisen.

9. Klebeband nach einem der vorhergehenden Ansprüche, wobei die schließbaren Garne zusätzlich zu der Schußrichtung des Stoffes auch in der Kett- und/oder in einer oder mehreren geneigten Richtungen in dem Stoff vorliegen können.

10. Klebeband nach einem der vorhergehenden Ansprüche, wobei der Klebstoff ausgewählt wird aus der Gruppe bestehend aus Klebstoffen auf Kautschukbasis (sowohl natürlich wie auch synthetisch), Acrylatklebstoffen, Siliconklebstoffen und Polyurethanklebstoffen und Kombinationen hiervon.

11. Klebeband nach Anspruch 10, bei dem der Klebstoff ausgewählt wird aus der Gruppe bestehend aus: natürlichem Kautschuk, Polyisopren, Styrol-Isopren-Blockcopolymer, Styrol-Butadien-Blockcopolymer, Butylkautschuk, Polystyrol-Poly(ethylen/butylen)-Polystyrol, Polystyrol-Poly(ethylen/propylen)-Polystyrol, Polystyrol-Polyisopren-Polybutadien, Polybuten, Polyacrylaten, Polydiacrylaten, Polytriacrylaten, Polymethacrylaten, Polydimethacrylaten, Polytrimethacrylaten, Polytetramethacrylaten, Polyacrylamiden, Polymethacrylamiden, Polyacrylimiden, Polymethacrylimiden, Polymethacrylsäure, Polyacrolein, Polymethacrylonitril, Poly(maleinsäure) und Derivaten, Poly(fumarsäure) und Derivaten, Poly(krotonsäure) und Derivaten, Poly(itaconsäure) und Derivaten, Poly(ciraconsäure) und Derivaten, Poly(maleaminsäure) und Derivaten, Poly(vinylethern), Polyisocyanaten, Polystyrol und Derivaten, Polylactonen, Polybetainen und kompatiblen Mischung hieraus.

12. Verfahren zum Bilden eines Klebebands nach einem der vorhergehenden Ansprüche, wobei das Substrat durch Wirken eines undurchlässigen laminaren Materials in das Substrat gebildet wird.

13. Verfahren nach Anspruch 12, bei dem dieses laminare Material durch das Wirken in das Substrat in Bänder geteilt wird.

14. Verfahren zum Bilden eines Klebebands nach einem der vorhergehenden Ansprüche, wobei das Substrat durch Wirken vorgeformter Bandgarne in das Substrat während der Herstellung und dann Schmelzen der Bandfolie und teilweise anderer Garne in dem Substrat hergestellt wird, um das geschlossene Substrat zu schaffen.

15. Verfahren nach Anspruch 14, bei dem das Schmelzen durch Erhitzen des Substrats vor Auftragen des Klebstoffs erzielt wird.

16. Verfahren nach Anspruch 15, bei dem das Erhitzen durch heißes Gas oder Dampf, das/der über das Substrat geleitet wird, erreicht wird.

17. Verfahren nach Anspruch 15 oder 16, bei dem zumindest eine Seite des Substrats weiter eingeebnet wird durch Durchführen des Substrats durch Walzen, von der zumindest eine erhitzt ist.

18. Kettengewirktes (WIWK-) Substrat, bei dem das kettengewirkte Substrat ein Schußgarn umfaßt, das einen höheren Titer aufweist als das Wirkgarn, zur Verwendung in der Herstellung eines Klebebands nach einem der Ansprüche 1 bis 13, **dadurch gekennzeichnet, daß** das Substrat texturierte Garne umfaßt.

19. Substrat nach Anspruch 18, wobei die texturierten Garne geschmolzen und wahlweise verschmolzen werden, um das geschlossene Substrat zu bilden.

20. Substrat nach Anspruch 19, wobei das Schmelzen oder Verschmelzen erzielt wird durch Führen von heißem Gas oder Dampf über das Substrat.

21. Substrat nach Anspruch 19 oder 20, wobei das Substrat durch Walzen geleitet wird, von der zumindest eine erhitzt ist, um zumindest eine Seite des Substrats einzuebnen und wahlweise das Schmelzen oder Verschmelzen des Substrats zu unterstützen.

22. Kettengewirktes (WIWK-) Substrat, bei dem das kettengewirkte Substrat ein Schußgarn umfaßt, das einen höheren Titer als das Wirkgarn aufweist, zur Verwendung in der Herstellung eines Klebebands nach einem der Ansprüche 1 bis 13, **dadurch gekennzeichnet, daß** das Substrat eine Bandfolie umfaßt, die in das Substrat gewirkt ist.

23. Substrat nach Anspruch 22, bei dem die Bandfolie durch eine Lage gebildet wird, die in Bänder durch Wirken in das Substrat gespalten wird.

24. Substrat nach Anspruch 23, bei dem die Bandfolie durch Wirken von vorgeformten Bandgarnen in das Substrat gebildet wird.

25. Substrat nach Anspruch 23 oder 24, bei dem das Substrat durch thermisches Verschmelzen der Bandfolie und wahlweise der anderen Substratgarne geschlossen wird.

26. Substrat nach Anspruch 25, bei dem die Bandfolie texturierte Garne umfaßt.

27. Substrat nach Anspruch 25 oder 26, bei dem die Bandfolie thermoplastisch ist.

28. Substrat nach Anspruch 25, bei dem die Verschmelzung durch Durchleiten des Substrats mit der thermoplastischen Bandfolie oder texturierten Garne durch mindestens eine erhitzte Walze erzielt wird.
